# EUROPEAN PATENT APPLICATION

(11) **EP 4 123 864 A1**
(43) Date of publication of application: **25.01.2023**
(21) Application number: 22186168.5
(22) Date of filing: 21.07.2022
(51) Int. Cl.: H02J 3/14

(54) **A SYSTEM FOR CONTROLLING ENERGY SUPPLY AND/OR CONSUMPTION FROM AN ENERGY NETWORK**

(30) Priority: 21.07.2021 GB 202110458
(71) Applicant: Passiv UK Limited, Bury St Edmunds, Suffolk IP30 9UP (GB)
(72) Inventor: CARTER, Edwin, Bury St Edmunds, IP30 9UP (GB); SWEETNAM, Trevor, Bury St Edmunds, IP30 9UP (GB); TURNER, Chris, Bury St Edmunds, IP30 9UP (GB); HARDING, Fraser, Bury St Edmunds, IP30 9UP (GB)
(74) Representative: Forresters IP LLP

(57) **Abstract**

We provide a system for controlling energy supply to and/or consumption of energy by multiple properties from an energy network so as to cause an aggregate of the energy consumed at the properties to comply with one or more requirements, each property having an associated energy management device operable to control consumption of energy at its associated property by controlling one or more energy devices associated with the property, the system including a controller configured to: receive first Optimiser State data from a first energy management device, and second Optimiser State data from a second energy management device, each including a set of logic parameters; simulate the operation of the first and second energy management devices using the received first and second Optimiser State data, to determine a first aggregate forecast energy usage for first and second properties associated with the first and second energy management devices; determine first and second energy management rules to be imposed on the energy management devices each defining an updated set of logic parameters; simulate the operation of the first and second energy management devices using the updated logic parameters, and determine that the updated aggregate forecast complies with the requirements; and communicate the updated logic parameters to the energy management devices.

## Description

### Description of Invention

The present invention relates to a system for managing demand and/or supply on an energy network. In particular, the present invention relates to a system for controlling energy supply to and/or consumption of energy by multiple properties from an energy network so as to cause an aggregate of the energy consumed at the properties to comply with one or more requirements, to a method of operating the system, and to an energy management device configured to control energy consumption associated with a property. In particular, but not exclusively, the system is for managing demand in an electricity network. The invention is also suitable for application to district heating networks, for example, and to gas networks.

Increasing amounts of our electricity generation comes from renewable sources, which unlike conventional power generation, cannot be switched on and off to meet demand. This means that matching supply to demand becomes an increasingly difficult and important problem, both on a national level and within local sub-grids. At present, to balance supply with demand, changes can be made to the output of high capacity generators or the power usage of large industrial customers. In additional grid storage (via grid batteries, for example) is used to store power at times of excess supply, and to provide additional power to the grid at times of high demand.

A similar situation arises in district heating networks, where there is a strong drive to reduce consumption peaks on the demand-side, to allow efficient use of the restricted resources in the system. In such systems there is also a desire to allow and maximise utilisation of heat sources such as combined heat and power or solar thermal plants, which present a relatively lower 'cost' to the network given their low environmental impact. If demand management is included at the system design stage, smaller central plants and reduced pipe sizing for distribution of heat can be used, delivering major benefits (e. lower use of resources than would otherwise be the case).

An important tool to address the above challenges is demand-side management (also known as demand-side response or DSR), with which electrical loads in large numbers of individual homes can be adjusted.

Energy networks are traditionally managed by forecasting demand using statistical models that are calibrated using long-term historical demand patterns (e.g. by time of day, day of the week, etc.) and simple physical relationships between heat demand and external temperature (e.g. linear regression methods). This works for large numbers of well-understood conventional systems which have a straightforward response to external factors, and simpler types of control signals which can be represented by straightforward terms in the regression models. These methods quickly break down when system responses become more complex.

For example, an energy supplier may levy a "critical peak price" tariff which is much higher during peak times (e.g. 5-7pm) in the hope of reducing demand at these times. This approach is highly dependent in the human response to the high price (e.g. waiting until 7pm to do your washing), which is very unpredictable. In addition, this approach may have consequences such as causing even bigger peaks in demand just before 5pm and just after 7pm, if everyone decides to consume energy at exactly the same time. An automatic system programmed to respond to the price signal would have a similarly complex response, and demand spikes around price changes are not easily represented in the aggregate system model - yet are the most important effects to capture. A very large amount of data over many years would be needed to generate and measure the demand patterns under a range of different operating rules to operate a system performing DSR, making the system infeasible or inaccurate.

Existing demand-side management systems may incorporate a balance between demand shaping, client comfort and electricity bills. Such systems may predict demand using historical data on the relationship between appliance settings (such as set temperature, operating mode) and electricity consumption (load curve), and use this model to determine appliance settings for each home that will achieve a desired level of demand suppression as an aggregate across a portfolio of homes. This calculation is done on a Central Server, and the resulting settings sent to electrical equipment in each home over the internet.

However, there are many deficiencies associated with demand management systems of the prior art. For example, a consumer (inhabiting a property which is subject to the demand management system) may be required to set up a long list of user settings specifying aspects of the operation of the system and its application to their property. In addition, predicting demand commonly relies on use of a crude regression model which typically involves a weather-compensated long-term average. Establishing such a model requires large amounts (i.e. many months) of historical energy data to characterise, and the parameters cannot be estimated a priori so an extended period of experimental settings, balancing system costs against comfort levels, would be required in practice. This is infeasible when managing large groups of residential properties (e.g. requiring running air conditioning at different set points for whole days at a time).

Power consumption models currently used in demand management systems cannot represent building thermal inertia, and are thus suitable only for managing air conditioning systems. Such systems fundamentally cannot represent energy being used to pre-warm or pre-cool a building in advance of a constrained period, which is a crucial component of demand flexibility. Further, they cannot represent non-linear heating systems or those with more complex characteristics such as hybrid systems (i.e. combining multiple heating sources). This is a fundamental limitation of existing methods.

There is no feedback on what is happening live in individual homes and utilising this to directly react and change demand management. The home may be warmer than average at the start of a day for the current external weather and there is no mechanism for this "current state" to affect demand forecasts. The user may change "control preference information" and this will affect the calculation, but the calculation of the impact on the demand curve will be highly inaccurate and there is no explicit method for a live update.

Traditional demand management techniques rely on the hub of the system, at a server on the network, having full control over the devices being managed and so that the "intelligence" of the system is entirely centralised. This means that there can be no optimisations within each individual property being managed. For example, introducing hybrid heating systems or solar PV integration, independently of the managed network, is not straightforward as the central system is directly changing/overriding local control logic. Furthermore, local optimisation systems within a property may actively work against the centralised system managing the property remotely.

As an example, it is known for a centralised system to determine schedules for charging electric vehicle batteries, so as to 'stagger' the charging times across a portfolio of properties. In such systems, the central coordination results in specific operational schedules for the charging devices being communicated to the remote charging points. While there may be some flexibility over how strictly the schedule is adhered to (for example, where power supply is restricted the charging rate might be lowered to accommodate that), the central server communicates a set of instructions to the end device, rather than devolving decisions to the remote smart devices over how to operate the end energy devices.

Demand-side management can be used for example to spread out demand on the grid, so as to limit or reduce peaks and the associated reserve generation requirements, or to shift demand to allow energy users to schedule usage for times of relatively lower demand.

Limiting local peak network demand can reduce the environmental, resource and economic costs of constructing and maintaining energy networks, enabling greater use of renewable electricity without such extensive requirement for such reinforcement costs.

Demand-side management can have an effect on property-owners, for example by affecting their comfort levels (if a heating system is involved) and impacting their energy usage. It is preferable that these impacts are taken account of, and balanced with other system-wide aims, if demand-side management is to be acceptable to consumers. Similarly, there should preferably be a fair way of sharing the burden of demand-side management as the effect on different consumers will not be equal. A naive demand shaping system may result in particular householders consistently suffering more, and for systems like this to be successful and socially acceptable, it is preferred that the implementation be as fair as possible.

Implementing demand-side management also presents practical challenges. There should be a reliable communications channel to each demand-side local control system. In systems having a central demand management system that directly controls the energy devices, or provides direct schedules for operation, for example, loss of communication with the central server means that the smart management of the energy devices is lost entirely during that period. If some messages do not get through or cannot be actioned, it is essential that the central demand management system is aware of this feedback, so that it can compensate accordingly. Similarly, it is advantageous if spontaneous changes at the local systems are reported live back to the central demand management system (for example, a householder putting an appliance on or returning home early and requiring heat).

In summary, there are considerable advantages to operating demand side management on electricity or heat networks, but in practice it remains difficult to carry out accurately and reliably.

The present invention seeks to reduce or overcome one or more of the deficiencies associated with the prior art.

The present invention provides a system as claimed in claim 1 of the appended claim set, a device as claimed in claim 6, and a method as claimed in claim 13. The present invention also provides preferred embodiments as claimed in the dependent claims.

According to a first aspect of the invention, we provide a system for controlling energy supply to and/or consumption of energy by multiple properties from an energy network so as to cause an aggregate of the energy consumed at the properties to comply with one or more requirements, each property having an associated energy management device operable to control consumption of energy at its associated property by controlling one or more energy devices associated with the property, the system including a controller configured to:
receive first Optimiser State data from a first energy management device, the first Optimiser State data including data relating to one or more energy devices associated with the first energy management device, including a current state and settings of the first energy management device, and including a first set of logic parameters;
receive second Optimiser State data from a second energy management device, the second Optimiser State data including data relating to one or more energy devices associated with the second energy management device, including a current state and settings of the second energy management device, and including a second set of logic parameters;
simulate the operation of the first and second energy management devices using the received first and second Optimiser State data, to determine a first aggregate forecast energy usage for first and second properties associated with the first and second energy management devices;
determine a first energy management rule to be imposed on the first energy management device and a second energy management rule to be imposed on the second energy management device, the first energy management rule defining a first updated set of logic parameters, and the second energy management rule defining a second updated set of logic parameters, the first updated set of logic parameters differing from the second updated set of logic parameters;
simulate the operation of the first and second energy management devices using the first and second Optimiser State data, updated by the first and second updated sets of logic parameters, to determine a second aggregate forecast energy usage for the first and second properties;
determine that the second aggregate forecast energy usage complies with the requirements; and
communicate the first updated logic parameters and second updated logic parameters to the respective first and second energy management devices.

The method may further include:
determining that the aggregate forecast energy usage for the first and second properties fails to comply with the requirements, and
simulating the operation of the first and second energy management devices using the first and second Optimiser State data, updated by first and second revised sets of logic parameters (which differ from the first and second sets and the first and second update sets), to determine a revised aggregate forecast energy usage for the first and second properties, and
determining whether that revised aggregate forecast energy usage complies with the requirements, and if so, replacing the first and second updated logic parameters with the first and second revised sets of logic parameters, before communicating the first and second updated logic parameters to their respective energy management devices.

The method may further include simulating the operation of the first and second energy management devices using the first and second Optimiser State data, updated by each in turn of multiple first and second updated sets of logic parameters, and determining a corresponding aggregate forecast energy for each one of the multiple first and second updated sets of logic parameters,
determining aggregate forecast energy usage complies with the requirements; and
of those first and second updated sets of logic parameters which produced a compliant aggregate forecast energy usage, selecting the first and second updated sets of logic parameters, before communicating the first and second updated logic parameters to their respective energy management devices.

The logic parameters may define a demand constraint rule imposing an upper or lower threshold on aggregate energy usage by the energy devices associated with the respective energy management device within periods of a schedule, and optionally define periods within the schedule during which energy usage is encouraged.

The logic parameters may define a virtual cost rule providing a function associating energy usage with a penalty that varies over time.

Each energy management device may be operable to control a temperature management system for heating and/or cooling its associated property, and the Optimiser State data includes information relating to a temperature associated with the property, and a set point schedule of target temperatures received from a user associated with the property.

The Optimiser State data may include one or more of the following:
data describing properties of the energy device(s) controlled by that respective energy management device;
data describing a current state of the energy device(s) controlled by that respective energy management device;
data describing a current condition of the property associated with that respective energy management device;
data describing learned thermal properties of the property associated with that respective energy management device;
data describing one or more condition constraints imposed on the energy management device;
data describing weather forecast information received by the energy management device; and
energy charging regime information associated with an electric vehicle.

According to a second aspect of the invention, we provide an energy management device configured to control energy consumption associated with a property, the energy management device being operable:
to store logic parameters defining logic for scheduling usage of one or more energy devices associated with the energy management device,
to communicate Optimiser State data to a remote controller, the Optimiser State data including:
   data relating to the energy device(s),
   a current state and settings of the energy management device, and
   the logic parameters;
   to receive updated logic parameters,
   to determine a control schedule for operating the energy device(s) based on the updated logic parameters, and
   to control the energy device(s) according to the determined control schedule.

The energy management device may provide a processor configured to determine the control schedule, and to forecast aggregate energy consumption over a given period.

The logic parameters may define a demand constraint rule imposing an upper or lower threshold on aggregate energy usage by the energy devices associated with the energy management device within periods of the control schedule, and optionally define periods within the schedule during which energy usage is encouraged.

The logic parameters may define a function associating energy usage with a penalty that varies over time, and the energy management device may be configured to control the energy device(s) so as to minimise the incurred penalty.

The energy device may be configured to control energy devices including at least one of the following: a central heating system, an air-conditioning system, a refrigeration system, a hot water storage system, an electric vehicle (EV) charging system, a washing machine, an electric battery, a heat battery.

The Optimiser State data may include at least one of: information relating to a temperature associated with the property, and a set point schedule of target temperatures received from a user associated with the property.

The Optimiser State data may include one or more of the following:
data describing properties of the energy device(s);
data describing a current state of the energy device(s);
data describing a current condition of the property;
data describing learned thermal properties of the property;
data describing one or more condition constraints defined by a user;
data describing weather forecast information received by the energy management device; and
energy charging regime information associated with an electric vehicle.

According to a third embodiment of the invention, we provide a method of operating a system for controlling energy supply to and/or consumption of energy by multiple properties from an energy network so as to cause an aggregate of the energy consumed at the properties to comply with one or more requirements, the system providing a controller, and each property having an associated energy management device in communication with the controller, and operable to control consumption of energy at its associated property by controlling one or more energy devices associated with the property, the method including the steps of:
receiving at the controller data indicating the requirements imposed on the supply to and/or consumption of energy by the properties from the energy network;
receiving at the controller first Optimiser State data from a first energy management device, the first Optimiser State data including data relating to one or more energy devices associated with the first energy management device, including a current state and settings of the first energy management device, and including a first set of logic parameters;
receiving at the controller second Optimiser State data from a second energy management device, the second Optimiser State data including data relating to one or more energy devices associated with the second energy management device, including a current state and settings of the second energy management device, and including a second set of logic parameters;
simulating at the controller the operation of the first and second energy management devices using the received first and second Optimiser State data, to determine a first aggregate forecast energy usage for first and second properties associated with the first and second energy management devices;
determining at the controller a first energy management rule to be imposed on the first energy management device and a second energy management rule to be imposed on the second energy management device, the first energy management rule defining a first updated set of logic parameters, and the second energy management rule defining a second updated set of logic parameters, the first updated set of logic parameters differing from the second updated set of logic parameters;
simulating at the controller the operation of the first and second energy management devices using the first and second Optimiser State data, updated by the first and second updated sets of logic parameters, to determine a second aggregate forecast energy usage for the first and second properties;
determining at the controller that the second aggregate forecast energy usage complies with the requirements; and
communicating the first updated logic parameters and second updated logic parameters from the controller to the respective first and second energy management devices.

Determining a first or second energy management rule defining a set of logic parameters may include determining logic parameters defining a demand constraint rule imposing an upper or lower threshold on aggregate energy usage by the or each respective energy device(s) associated with an energy management device within periods of a schedule, and optionally defining periods within the schedule during which energy usage is encouraged.

Determining a first or second energy management rule defining a set of logic parameters may include determining logic parameters defining a virtual cost rule providing a function associating energy usage with a penalty that varies over time.

In broad terms, we describe a system of demand-side management which works, in general terms, by forecasting demand for a portfolio of properties, calculating logic parameters to shape the aggregate demand, and then pushing logic parameters to individual properties to activate demand-side response (DSR). By portfolio, we mean the set of properties subject to control of the system.

Furthermore, where the term 'homes' is used herein, this is with reference to a residential setting; however, the term should be construed to include properties in general, of any type, since the property type has no specific restriction on the effectiveness of the system or its application.

Herein, it should be understood that references to 'costs' or 'cost-savings' are not tied to monetary costs, but rather refer to the relative resource usage and environmental cost involved in power generation and in the provision and maintenance of the required infrastructure, for example. Where cost fluctuation and times of 'peak cost' are discussed, it is with reference to a relative cost to grid production; clearly, the economic cost of energy usage is linked to the relative supply and demand on a grid or local system at any point in time, and therefore the use of power at a time of higher relative demand presents a higher "cost" to the power generation system at that time due to constraints on the system. The term 'cost function' should be construed to mean a function that determines a penalty to using energy at a particular time; i.e. if supply is limited, then the energy must be rationed in a way that has the least adverse impact, and in doing so one should seek to minimise the value determined by the cost function.

A local control system in the home is responsible for determining efficient operation of local energy devices by implementing control logic to balance and schedule energy use to meet certain operating criteria. The local control system stores logic parameters used in calculations to determine a control strategy for operating the local energy devices. In general terms, the logic parameters define instructions or values for changing the behaviour of the optimisation calculations performed by the local control system to achieve an efficient control strategy for controlling its associated energy devices. In particular, the logic parameters may define parameters that incentivise or modify the operation of the optimisation calculation to favour one strategy over another.

The local control system receives updates to those logic parameters from the central server, to adjust its decision-making for operation of the energy-consuming device(s). A major challenge is determining the right logic parameters to send to the local control systems, to adjust the way they perform. If the choice is determined naively without knowing in advance the effect it is likely to have, an intervention may not have a desired impact. The repercussions can include greater demand volatility and side-effects such as spikes in demand.

In some embodiments of the technology we address this by introducing a model for the response of the portfolio. Even then, the choice of logic parameters to achieve a particular desired aggregate demand shape is a high-dimensional (due to many homes and many time periods), poorly determined, inverse problem which is very complex computationally. For these reasons, simulating and controlling the local devices entirely from the central server would be massively computationally expensive, and inefficient, and we have found it advantageous to split the simulation and control optimisation aspects.

It should be appreciated that the systems described provide environmental benefits, through optimised use of resources both at the time of energy consumption, but also at the stage of installing infrastructure for the energy grid, since energy use can be optimised.

Components of a demand management system according to embodiments of the technology are:
(a) A method for forecasting the aggregate demand from a portfolio of properties, in the presence of a particular set of logic parameters.
(b) A method for determining the logic parameters that are likely to achieve a desired aggregate demand shape.
(c) A method for enacting the logic parameters at each property.

The first demand forecasting stage (a) is in itself valuable to an energy network operator, as sufficiently accurate forecasts enable planning ahead. This allows them, for example, to bring online the necessary energy generating plants in sufficient time to meet additional demand. The feedback from the combination of stages is essential to bring stability to the demand management process.

Embodiments of the technology will now be described, by way of example only, with reference to the following figures, of which:
Figure 1 is a schematic diagram of the components of the system, illustrating the interactions between an energy network and heating systems in each of many homes, each of which is controlled by Home Energy Management Systems (HEMS);
Figure 2 is a schematic diagram showing interactions between system components;
Figure 3 is a flow chart illustrating the steps involved in a coordination algorithm of embodiments of the technology;
Figure 4 is a flow chart illustrating the steps involved in a balancing algorithm of embodiments of the technology, and its interaction with a Home Energy Management System and an energy network;
Figure 5 is a diagram illustrating an example determination of initial logic parameters for a Load Capping Coordination Algorithm;
Figure 6 is a diagram illustrating the evolution of a cost-based coordination algorithm (according to Example 1);
Figures 7 to 11 illustrate the steps involved in a constraint-based coordination algorithm (according to Example 2);
Figure 12 is a diagram illustrating smoothing of logic parameters in order to avoid adverse effects associated with of sudden changes in demand;
Figure 13 is a diagram representing a Home Energy Management System; and
Figure 14 is a diagram representing a Central Server.

We now describe systems for managing demand on an energy network 30. An energy distribution management system is operable to predict power consumption for each network endpoint as a function of time in the future, and determining how the total (aggregate) demand pattern can be modified to give a shape that is beneficial to the network, by making precise adjustments to how energy is consumed at each endpoint and subsequently monitoring the response. The invention provides a methodology for accurately-controllable "demand-side management," for the case that each home has a predictive control device for its energy loads connected to a Central Server 10 via the internet.

In broad terms, and with reference to the appended Figures, we describe a system for controlling energy supply to and/or consumption of energy by multiple properties 20 from an energy network 30. In this way an aggregate of the energy consumed at the properties 20 is managed so as to comply with one or more requirements - the requirements being imposed by the management of the energy network 30 for example (i.e. at an energy grid level, with knowledge of current or future supply constraints).

Where reference is made to the energy network 30, particularly in the context of sending data to or receiving data from the network, this is intended to refer to the management systems responsible for controlling the operation of the energy network, rather than specifically to the infrastructure involved in providing energy to properties, per se.

In this context, an 'endpoint' of the network is a property 20 (such as a residential home, but also including any other power-consuming property) having controllable energy devices 24 connected to the energy network 30. Within each property, a "Home energy management system" 22 (HEMS) acts to control the operation of one or more energy devices 24 within the property, as discussed below.

We also refer to control of room temperature in homes on the network, and space heating provision within homes, but it should be understood that the systems and methods are equally applicable to other forms of energy consumption such as provision of air conditioning, heating, and refrigeration, for example, and in the setting of any property. For example, the systems described apply equally to space cooling provision, domestic hot water provision, and for the case of an electrical network, the HEMS 22 can also control other loads such as electric vehicle (EV) charging, and cold and wet appliances (fridge, washing machine etc.), and include this load in the demand management, managed in a similar way. It can also coordinate with local renewable energy sources (e.g. solar PV) and energy storage (e.g. electric batteries, latent heat storage such as 'heat batteries'). In these cases the UI can be extended to include requirements on when the electric car next needs to be used, or when the washing needs to be completed by, for example).

It should be understood that while energy-consuming devices are described throughout the provided examples, and in particular heating systems, the term energy device 24 should be construed as including energy-consuming devices, energy-storage devices (such as a battery) and energy-generating devices (such as solar PV panels, or other generating means). The system and methods described herein are applicable to controlling consumption of energy in properties, and on a wider portfolio of properties, but this should be considered to include net consumption of energy. For example, in a property providing a heating system (an energy-consuming device) and a solar PV system (an energy-generating device), the aggregate energy usage associated with the property may be controlled by the HEMS 22.

References in the description to heating systems and associated user-defined heating control set points, should be construed more generally as applying to energy devices 24 and to condition constraints input by a user to the HEMS 22 or to the energy devices 24 themselves.

It should also be understood that the HEMS 22 is referred to generally as an 'energy management device', and references to HEMS 22 or to an energy management device should be read interchangeably. The energy management device is one that is operable to control consumption of energy at its associated property by controlling one or more energy devices associated with the property. This is achieved by implementing optimisation logic to select appropriate schedules and settings for operating the energy devices 24.

The systems described use simulated agents at a Central Server 10 that can replicate to a high degree of accuracy (and preferably exactly replicate) the control optimisation calculations in individual properties. To enable this, the central server 10 stores control logic associated with the HEMS 22 so that its behaviour may be simulated. When requested, the HEMS provides the central server 10 with its "Optimiser State", discussed in detail below, defining data including logic parameters that define aspects of the operation of the HEMS 22. This allows hypothetical scenarios to be explored quickly, determining control strategies that are predicted to result in the desired aggregate demand shape. Robustness is ensured by HEMS in individual homes having a methodology to honour previous predictions (i.e. to carry out previously-determined control steps or to adhere to previously determined power usage), and the central controller receiving live demand forecasts, and recalculating if the aggregate forecast diverges from the desired shape.

It should be understood that where algorithms are described, the algorithm is considered to be implemented via a corresponding 'module'. It is intended that such modules are implemented in software as would be generally understood in the art, but the term should not be excluded from encompassing modules embodied as hardware configured to perform a particular task, for example. For example, an 'optimisation algorithm' is performed via an associated 'Optimisation Module' configured in software (or hardware) to perform the functionality as described.

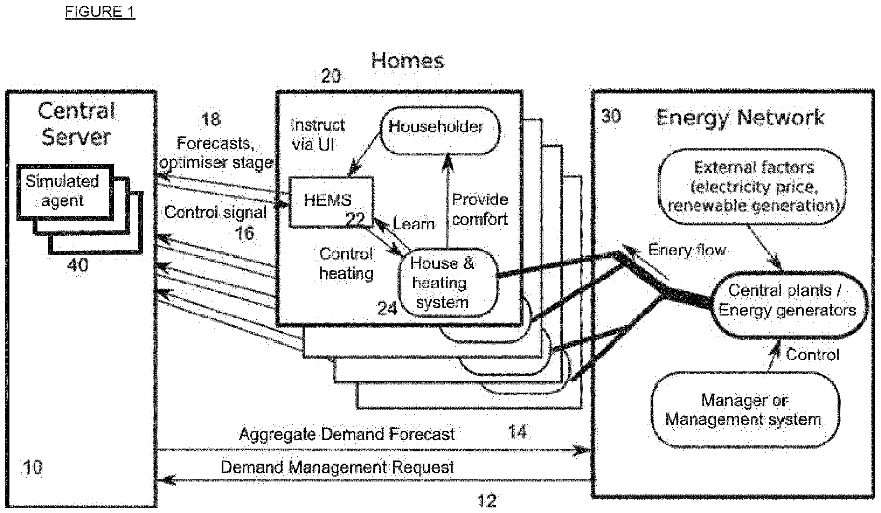

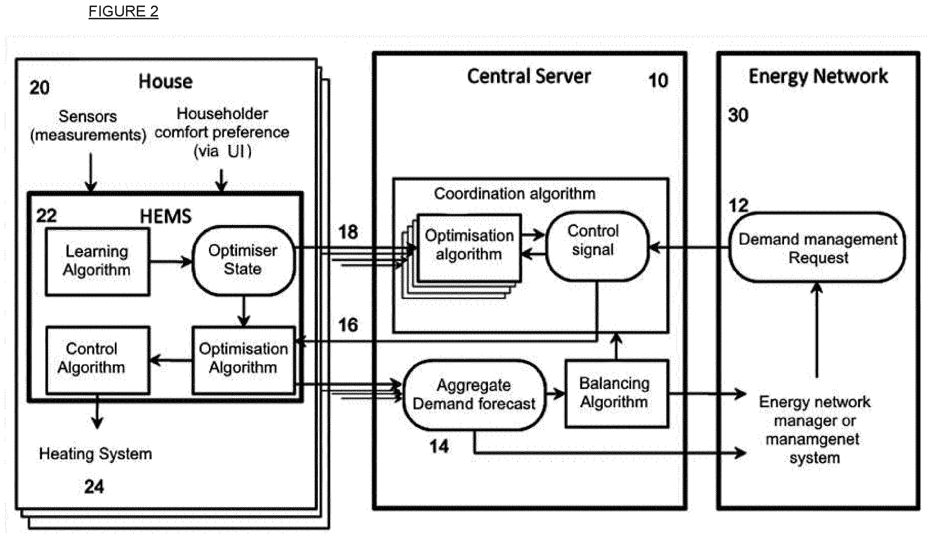

With reference to Figures 1 and Figure 2, the system has two main components: a Home Energy Management System 22 (HEMS) installed in each of many properties 20 (end points of the energy network 30), and a single Central Server 10 (CS). The term Central Server 10 refers to a 'single' server or group of servers, which may be located in one location or spread over multiple locations, but which effectively act as a single entity.

The Central Server 10 effectively acts to receive forecasts of energy usage at each property 20 from its respective HEMS 22, and to determine an aggregate forecast energy usage for the group of properties 22 being managed. The Central Server 10 determines an energy management rule to be imposed on each HEMS 22, the energy management rule defining one or more logic parameters, so as to update the control of its associated energy devices 24 and so update the energy consumption forecast for that property 20. In this way, the forecast of the consumption predicted at the Central Server 10, when the energy usage at each property is subject to the new energy management rules, is updated to reflect that change. The Central Server 10 in this way determines a suitable energy management rule, or plurality of rules to be imposed on the HEMS 22, which will result in the portfolio operating in a way that is more likely to comply with the imposed requirements. Once a suitable energy management rule is determined, it is communicated to the one or more HEMS.

It should be understood that in some embodiments of the technology, a single energy management rule may be determined for application to the HEMS 22 across the portfolio (i.e. a single rule to be applied to all HEMS 22).

In other embodiments, one or more different energy management rules may be determined to be applied to different subsets of the HEMS 22 within the portfolio. In such embodiments, the Central Server 10 is configured to determine a first energy management rule to be imposed on a first one of the HEMS 22, and a second, different, energy management rule to be imposed on a second one of the HEMS 22. The first and second energy management rules are communicated respectively to the first and second HEMS 22, so that each subsequently operates according to the rule it has been allocated.

The forecasts of energy usage at each property 20 can be determined on the basis of Optimiser State 18 data received from the HEMS 22 of each property. The Optimiser State 18 data include data relating to the one or more energy devices 24 associated with the property 20, and including a current state and settings of the HEMS 22. This may take the form of data describing current system settings of the HEMS 22 and data about its current performance, data describing settings of energy devices 24 within the property 20 and/or the settings of the HEMS 22 in terms of controlling the associated energy devices 24, or a combination of these and other features, as described in greater detail below. The Optimiser State 18 data can be used to determine how the HEMS 22 and the property 20 with which it is associated, is expected to use energy based on current and/or stored settings covering future time periods.

Importantly, the Optimiser State 18 data, containing one or more logic parameters of the HEMS 22, enables the Central Server 10 to recreate the control logic implemented on the HEMS 22 so that its operation can be simulated to the required level of precision. The central server 10 exactly replicates the optimisation calculation in the HEMS 22 using the received Optimiser State 18 data, allowing the simulation at the Central Server 10 to approximate the true behaviour of the HEMS 22. For example, the optimisation calculation predicts the general energy flows for each period of 0.5hr-2hr, but the live HEMS 22 makes control decisions in real time about how to operate the associated energy devices 24, such as when a heat pump should turn on and off and the target temperatures it should be operating at. These "live" decisions can't be exactly represented by the predictive calculation in the simulation because they are triggered by actions occurring live and based on changing conditions.

The Optimiser State 18 data effectively provides the minimum set of data and/or settings of the HEMS 22 that allows its performance and its associated energy usage (i.e. of the energy devices 24 associated with the property 20) to be modelled and a simulation of the HEMS 22 constructed by the Central Server 10.

For example, the Optimiser State 18 data may include data about a heating system associated with the property 20 (such as its set point schedule, for example), and data about the configuration of the HEMS 22 associated with the property. The Optimiser State 18 data may further include data indicating expected patterns of energy usage associated with one or more of the energy devices 24, for example.

The property 20 may provide, for example, an energy-consuming central heating system that is controlled by the HEMS 22, and for which settings relating to the future operation of the heating system are stored. The HEMS 22 may further include a model of energy-consuming behaviour within the property, so that future performance can be predicted with a high accuracy. The Optimiser State 18 data may include, for example, a set point schedule of target temperatures received from a user associated with the property 20 (i.e. input by a user to the control application managing their heating system). The Optimiser State 18 data can be used as input to optimisation calculations (as explained below), to enable a forecast of the temperatures in the property 20 and/or a forecast of energy consumption at the property 20, for example.

In some embodiments of the technology, the Optimiser State 18 data includes one or more thermal properties of the property 20 itself and/or a model of its thermal characteristics; i.e. allowing performance of heating devices within the property 20 to be modelled based on the known or learned temperature properties of the property 20.

Again in general terms, in some embodiments of the technology, the Central Server 10 determines an energy management rule by simulating performance of the HEMS 22 device or devices within the portfolio by applying the proposed energy management rule to the current or forecast future performance information provided by the Optimiser State 18 data. In other words, if the control logic parameters of the HEMS were updated with new parameters proposed by the energy management rule, how would the HEMS 22 subsequently perform? In this way, the Central Server 10 may run simulations of the performance of the HEMS 22 associated with each property, so as to simulate the effect of applying the proposed energy management rule to the HEMS 22 on its future performance, in order to replicate (exactly) the control optimisation calculations being performed by the HEMS 22 in individual properties. In this way, the energy consumption forecast for that property may be updated with an informed assessment of its future performance.

What is important to note, however, is that the energy management rules/logic parameters provided via the control signal from the Central Server 10 to the HEMS 22 do not directly control the energy devices associated with the HEMS 22. Nor do they necessarily dictate patterns or bounds on how the HEMS 22 must operate the energy devices. Instead, they update the control logic of the HEMS 22 so as to modify the way the HEMS 22 optimises energy usage in the property. Control decisions are still made locally by the HEMS 22 - not centrally - but the logic behind those decisions is made using updated logic parameters in accordance with the energy management rule(s).

Each HEMS 22 effectively coordinates the heating and/or energy provision within a property 20. In a residential setting, the HEMS 22 receives instructions from users of the property 20 via a User Interface. This User Interface (Ul) may be provided by a local controller device, a smart phone, or a web portal, perhaps communicating via the Central Server 10. The UI allows a user to set heating preferences and requirements for the property 20 in a straightforward way (such as when they want their house to be warm, and what minimum/maximum temperature (set-point) is desired). These preferences are condition constraints input by the user to the HEMS 22, and also referred to as user-defined heating control set points.

The HEMS 22 is operable to counteract, at least in part, deviations in the forecast temperature within its associated property 20 from the set point schedule. By imposing a rule on the HEMS 22 which limits the use of energy during a certain time period, for example, the HEMS 22 may alter the control of the heating system before, during, and/or after that period so as to limit and/or reduce the deviation in temperature from the planned schedule. Information relating to this adaptive control aspect of the operation of the HEMS 22 may be included in the Optimiser State 18 data, and as such included in the calculations performed by the Central Server 10 when simulating future performance.

In embodiments of the technology, the deviations in temperature from the stored set point schedule take account of an allowed margin of deviation from those stored set points. The HEMS 22 may store values, which may be configured by a user according to their preferences, indicating a tolerated deviation from the set points. For example, the user may indicate an allowance of + or - 1°C from the set point over the specified time interval, or +/-0.5°C, for example. The system may also, or alternatively, include upper and lower limits set by a user (or set at default values) for limiting the heating and or cooling at a property. In a very cold environment, for example, it may be necessary to ensure there is always a certain level of heating provided at a property in order for it to be comfortably habitable.

Looking now at the HEMS 22 in more detail, each HEMS 22 is, for example, provided as a "home hub", a small computer that connects to the internet, through which it communicates with the Central Server 10. While the term home energy management system 22 refers to a standard usage in a residential home setting, it should be understood that the term applies more generally to provision of such systems in properties of any type (including industrial, commercial, or any other type of property 20). The HEMS 22 typically provides at least a processor, a memory, storage media and communication ports for receiving and sending signals to associated devices within the property 20, and remotely to the Central Server 10.

The HEMS 22 is in control of heating provision within the home (and this can operate even in the absence of an internet connection, and with no input from the Central Server 10), and does this by controlling the heating system (for example, a heat pump or a heat interface unit). The HEMS 22 is connected to sensors in the home also, usually including an energy meter and a room temperature sensor.

The HEMS 22 incorporates a thermal model of the house and heating system. Initially this will be configured to default parameters (i.e. thermal time constants, and power ratings) for the heating system and house type. Over a few days of heating usage, the system will characterise the house and heating system (using a method such as described in WO/2015071654 A1, for example), to refine these parameters.

In this context, the energy network 30 effectively interacts with the energy distribution management system in a manner representing the needs of the electricity or heat network. In practice, this may via: a human being (operating the system and specifying a maximum load conditions perhaps), via a software system for managing the energy network 30 (which interacts with the Central Server 10 through APIs), or via an abstract structure of other demand management system components (such as within the Universal Smart Energy Framework (USEF)), for example.

Figure 1 shows a schematic diagram of the components of the system and the physical interactions between them: energy flows from the energy network 30 (which may be either electricity or heat) to the heating system in each of many homes, each of which is controlled by a respective HEMS 22 according to the wishes of the householder. Each HEMS 22 provides Optimiser State 18 data to the Central Server 10 which is able to reproduce the optimisation calculation of the HEMS 22 in a Simulated Agent and provide Aggregate Demand forecasts 14 to the energy network 30 management system. The energy network 30 in turn can make a Demand Management Request 12 which is executed by the Central Server 10.

As a result, updates to the HEMS 22 are provided as updated logic parameters 16 which then affect the energy consumption of each home.

In some embodiments of the technology, the HEMS 22 advantageously learns patterns of energy consumption that are not controllable by the HEMS 22. For example, the HEMS 22 may determine additional energy use within the property 20, such as instantaneous hot water usage or other electrical appliance use. For example, if a property 20 is usually vacant during the daytime, the power consumed within the property 20 may be far lower during working hours, and then rise during the early morning and during the evening when the occupants inhabit the property 20, using lighting, cooking and electronic entertainment devices, for example - none of which may be controlled by the HEMS 22. This data is referred to as an uncontrollable load profile.

The HEMS 22 controls the heating system using a predictive control strategy such as that described in WO2013/171448 A1. A by-product of these predictive control calculations is a forecast of the power consumption of the heating appliance in the future (e.g. every 30 minutes for the next 48 hours).

In some embodiments of the technology, the Central Server 10 connects to a set (or 'portfolio') of multiple HEMS 22 systems in multiple respective properties (i.e. each property 20 providing an HEMS 22 system). The term "Central Server" refers to a computer that is in communication with the management system of the Energy Network 30, an communicates with the HEMS 22 associated with properties within the portfolio. In general terms, the central server provides a computational hub that is capable of carrying out computations and modelling tasks, centrally, so as to remove a communication burden from the network. There are no particular hardware requirements placed on the Central Server 10 other than its ability to communicate and perform modelling calculations efficiently. In some embodiments it may be distributed over a region, and in other embodiments it may be located in one location.

The Central Server 10 may receive a "Demand Management Request 12", either triggered manually, periodically, or automatically in response to conditions. The Demand Management Request 12 specifies the list of homes to be included, the type of "coordination" calculation to be done (e.g. demand flattening, maximum aggregate load, increase/decrease flexible load against a baseline) and any parameters characterising the calculation (load maximum, tolerances etc).

In general terms, the term Demand Management Request 12 refers to the specification by the energy network 30 to the Central Server 10 of how demand should be managed on the network. It can include one or more of the following:
- An indication of a portfolio of properties to be included in the request (or multiple, possibly overlapping, portfolios with details for each);
- An indication of a "type" of demand management that is required (also referred to as a 'coordination type'), with a set of parameters characterising the aims of the request (e.g. flatten to mean value, or max/min demand values, or how much load would ideally be flexed);
- An indication of a target demand shape to be achieved. This may include a network 'cost function' providing a guide as to how far towards the target demand shape is 'worthwhile' - i.e. the extent to which the additional cost incurred by the network of failing to meet the target demand (in terms of resource use for example) makes it worth impacting performance within properties within the portfolio in order to meet the required target;
- An objective function, providing an effective "cost value" as an output with a demand shape as an input (e.g. as above, modelling the extent to which performance within the portfolio can be impacted for the sake of meeting the required demand shape);
- An indication as to whether the demand request is an isolated request, or should be periodically re-run (e.g. every half hour), or criteria based on which the request should be retriggered (e.g. aggregate demand forecast 14 received back from HEMS 22 exceeds a tolerance from a target profile);
- An indication of network-level static data (e.g. a baseload that contributes to network demand but is not controllable by the demand manager).

The Central Server 10 requests the Optimiser State 18 from each HEMS 22 in the portfolio. As explained above, this Optimiser State 18 is a set of information that characterises the operation of the HEMS 22, including parameters associated with its control logic. It may also include details of the configuration of the heating system (and/or any other controllable/configurable devices), its current state, and other settings applied to it. In particular, it may include data concerning the property 20 itself, including a representation of the thermal model of the house and heating system that the HEMS 22 has previously learned over time.

Since each HEMS 22 is a smart controller, controlling operation of the one or more energy devices 24 to which it is connected, the HEMS 22 is configured with control logic for optimising control of those energy devices 24.

In some embodiments, the Central Server 10 may store a record of the logic parameters associated with the or each HEMS 22. However, in preferred embodiments, the Central Server 10 is effectively 'stateless', as it requests the Optimiser State 18 data from each HEMS 22 as it is required, and subsequently carries out optimisation based on that fresh data. Historic logic parameters for a HEMS 22 unit are not taken into account in that scenario.

The logic parameters provided to the Central Server 10 in the Optimiser State 18 data are sufficient to recreate the configuration of the HEMS 22, and the rules / functions and/or algorithms used to determine the way it controls energy devices 24. The Optimiser State 18 enables the Central Server 10 to reproduce the calculation done in the HEMS 22 (for the predictive control strategy, see above) by providing parameters used in its control optimisation calculations, but with minimum communication overhead. Thus the Central Server 10 shares some of the exact same software code as the HEMS 22 to reproduce the optimisation calculation.

In some embodiments of the technology, the Central Server 10 uses the Optimiser State 18 to explore (i.e. model) hypothetical scenarios in the Central Server 10 without requiring backand-forth communications with the respective HEMS 22. It uses a coordination module 110 implementing a coordination algorithm to explore possible logic parameters 16 to send to the properties, and effectively determines the likely effect of the proposed control strategy on the portfolio of properties. This reproduces the effect of the control strategy on the aggregate demand without actually implementing that strategy.

So, in general terms, the Optimiser State 18 provides a complete (but minimal) set of information that allows a simulated agent at the Central Server 10 to reproduce the control optimisation performed by the Optimisation Module from the HEMS 22. This is achieved by initialising the same software with the same state data. The Optimiser State 18 may contain data indicative of one or more of the following (which is not an exhaustive list):
- Configuration of the heating system (e.g. type of assets present) associated with the property 20;
- Current state of the property 20 and heating system models (e.g. including a state vector of temperatures for the house thermal block model);
- Learned properties and patterns of this individual property 20 as determined by the learning module, including items such as a thermal model of the property 20 (for example, including a vector of time constants) and heating system characteristics (e.g. power rating, maximum temperature etc), and uncontrollable load;
- Customer instructions from the HEMS 22 and/or its user interface associated with the property 20 (including future heating requirements such as a list of upcoming set-points);
- Weather forecast information previously received by the HEMS 22; and
- Energy charging regime information, e.g. associating time of consumption with cost to the network.

The Central Server 10 sets up a "simulated agent" for each property 20, to model and simulate its respective property 20 in the portfolio, so as to model its performance and predict future performance. The agent is seeded with the Optimiser State 18 relating to the HEMS 22 associated with its respective property 20 so that it can exactly replicate the optimisation calculation performed by the HEMS 22.

Each simulated agent produces a demand forecast over a future period (e.g. a forecast of halfhourly power consumption over the next 48 hours). These forecasts output by the multiple simulated agents can be added up to make an aggregate demand forecast 14 for the portfolio.

Logic parameters 16 defining one or more energy management rules are calculated for each agent by comparing the desired aggregate demand shape over the portfolio with the current aggregate demand shape. References herein to a control signal providing logic parameters are intended to cover the communication of one or more energy management rules, and the terms control signal, logic parameters and energy management rule are used interchangeably. The Central Server 10 sends the respective logic parameters to each respective simulated agent, acquires the demand forecasts and iteratively adjusts the logic parameters until the aggregate demand profile is close enough to the desired demand shape. The final aggregate demand forecast 14 provides a useful output to the energy network 30 manager as an indication of estimated future demand on the network.

The logic parameters are the means by which a Coordination Module 110 (implementing a coordination algorithm) seeks to influence the Optimisation Module. In general terms, the logic parameters define instructions or values for governing the behaviour of the optimisation calculations performed by the HEMS 22 to achieve an efficient control strategy for controlling its associated energy devices 24. In particular, the logic parameters determine the operation of the optimisation calculation so as to optimise the control strategy; changes in the logic parameters incentivise or modify the algorithm to move from a suboptimal result towards a more efficient strategy. In other words, operating the Optimisation Module with updated logic parameters may result in the strategy changing, in line with an energy management rule determined centrally at the central server, to take account of that rule, to move to an optimised strategy from one that would otherwise have been considered suboptimal. This typically results in a time varying change to any of the initially fixed parameters of the optimisation calculation.

They energy management rules and associated alterations to logic parameters are selected (and iteratively adjusted if required) by the Coordination Module 110 running at the Central Server 10, and sent firstly to the Optimisation Module within the simulated agent in the Central Server 10 as a hypothetical influence to explore, and later sent to the HEMS 22 in the property 20 to influence the behaviour of the energy systems associated with that property 20. In embodiments of the technology, the logic parameters are calculated individually for each home (i.e., the values sent to different HEMS 22 within the system may differ from each other).

The logic parameters define at least one of the following types of energy management rules:
- A demand constraint rule;
- A virtual cost rule;
- A variable cost/constraint rule.

The energy management rules are imposed on the local HEMS 22 by the Central Server 10 by updating the logic parameters defining the operation of the local HEMS 22, to achieve the rules in the following ways.

In some embodiments of the technology, the logic parameters may define a demand constraint rule. A demand constraint rule is one indicating periods of demand suppression, specifying to the HEMS 22 a maximum power to be drawn over a period (i.e. a maximum aggregate amount that can be supplied), and/or specifying periods of surplus absorption, specifying a minimum power to be drawn during the period. In addition, the rule may specify unconstrained periods during which no upper or lower limit is placed on the energy usage. In some embodiments, this is calculated individually for each property 20. To achieve this, the logic parameters define periods of a schedule during which an aggregate usage threshold (across energy devices associated with the property 20 and / or the HEMS 22) cannot be exceeded, or the logic parameters define periods of a schedule during which the aggregate usage should not fall below a certain threshold, or the logic parameters define periods within a schedule during which energy use should be encouraged or promoted.

In some embodiments, the logic parameters define a virtual cost rule. Where the term 'cost' is used in this context, it should be understood to relate to a theoretical penalty imposed on the system for the purpose of carrying out the optimisation calculations, to enable the system to achieve or approach an optimal solution which minimises the penalty incurred.

A virtual cost rule indicates a virtual "cost" associated with using energy at each point in time; this may be indicated as a time series of timestamps and cost values, for example. A virtual cost is a cost value placed on energy usage, which may be used by the system artificially to enforce limits on use, or to ensure that energy usage is consistent with the desired outcomes. In other words, the virtual cost rule promotes usage at particular times, and/or suppresses or otherwise inhibits usage at other times, without preventing or forcing usage at any time.

The virtual cost rule may be the same across a set of properties, or may be tuned to specific properties. The same virtual cost rule may be sent to all properties in a portfolio, to indicate to the HEMS 22 devices in each property 20 the preferred times for energy usage, which are likely to be consistent across the portfolio. However, that if often not the case, and the nature of the rules sent is dependent on the implementation of the coordination algorithm. Of course the cost is "virtual" as it does not represent the actual cost of using energy, rather by assigning a cost to energy usage (indicated a constraint on supply, for example), it allows coordination of HEMS 22 devices across the portfolio to adjust their behaviour to manipulate patterns of demand. In this case, the logic parameters effectively define a cost or weighting to be attributed to the use of energy at particular periods within a schedule, which may alternate throughout the schedule. The cost or weighting may be positive or negative, and the HEMS 22 may require that the aggregate cost over a period be kept within a certain threshold, for example.

In some embodiments, the logic parameters define a variable cost/constraint rule. The variable cost/constraint rules indicates not only a demand constraint as described above, but also provides a flexible cost function associated with any failure to meet the given constraint. So, for example, in meeting the constraint, no cost may be assigned, whereas when failing to meet a constraint, a cost or weighting may be applied. In this manner, rather than providing a binary cost associated with a failure to adhere to the maximum power or minimum power constraints during periods of the schedule in which demand suppression or surplus absorption, respectively, the cost function is instead scaled. For example, the cost may be determined by a linear function, such that the cost to the system grows linearly larger according to the extent to which the constraint target is exceeded. The variable cost function need not be linear; it should be appreciated that suitable functions include polynomials or exponential functions, for example. In these embodiments the logic parameters may define an appropriate cost function as determined by the Central Server 10.

In some embodiments of the technology, the Central Server 10 / coordination algorithm selects an appropriate rule from one or more of the above rules, to achieve the required control of a HEMS 22 via those respective energy management rules. Further, the Central Server 10 may use different types of rule to control HEMS 22 units within a portfolio of properties, i.e. applying different energy management rules to different HEMS 22 units. The suitability of the type of energy management rule is determined at the Central Server 10, by the coordination algorithm (a particular algorithm is likely to use only one or other, but it is also possible to use both or a mixture for different properties).

The Central Server 10, having determined a combination of energy management rule and associated logic parameters 16 that optimises control over a set of properties so as to achieve the final aggregate demand, sends the determined logic parameters 16 to the (actual) HEMS 22 in the respective properties, so as to impose those energy management rules.

The HEMS 22 then contribute to the optimisation calculation in the same way as they did in the Central Server 10: determining the optimal way to control the devices within the property 20. Effectively, the HEMS 22 schedules usage of the energy devices using the updated logic received from the Central Server 10.

This optimisation within the property 20 by the HEMS 22 acts to minimise energy usage during peak times (i.e. times at which the cost to the energy network 30 is highest due to high demand) while attaining desired comfort levels and honouring any demand constraints communicated to the HEMS 22 from the Central Server 10 via the control signal and its logic parameters. In this sense the system acts to optimise compliance with the energy management rule communicated via the logic parameters, and also compliance with the user-defined condition constraints set locally. By "optimise compliance", we mean minimise deviation from both the communicated energy management rule and condition constraints, minimising an associated cost or penalty incurred for any such deviation.

Having determined its own local control strategy, the HEMS 22 communicates data concerning its proposed strategy to the Central Server 10, so that the Central Server 10 can determine its expected future energy demand. The Central Server 10 then aggregates and uses this information to confirm successful demand shaping. In embodiments in which the HEMS 22 itself determines a local forecast of energy usage requirements, based on stored settings, the Optimiser State 18 data may include details of that forecast of energy usage.

As time progresses, the HEMS 22 controls the local heating system and other energy devices in line with the optimisation calculation - adjusting schedules of usage and operating parameters, e.g., locally sending on/off commands, and temperature settings, etc., according to the type of heating system (as per the description of predictive demand control systems, for example, discussed in WO2013/171448 A1). It is important to note that these changes in use of the energy devices are not dictated by the Central Server 10. Instead, the logical decisions about how to operate the energy devices are determined by the Optimiser Module using the logic parameters - those stored locally, and as updated via control signals received from the Central Server 10 - and taking account of local user settings.

In some embodiments of the technology, the HEMS 22 also measures energy consumption and uses this data to adjust the energy device operation including the local heating system control so that the demand forecast it provided to the Central Server 10 is honoured. In other words, since the HEMS 22 has control over the energy usage of only a subset of the energyusing devices within a property 20, it can adjust the usage of those devices under its control to take account of excess (or reduced) energy consumption by other devices within the property 20. In this way, the HEMS 22 can ensure that the predicted usage is met (other than in cases of extremes of unpredicted energy usage, for example). This "power honouring" improves the accuracy and robustness of the demand management. Regular forecasts sent to the Central Server 10 means that load can be re-adjusted if the aggregate demand profile has changed.

In some embodiments of the technology, the HEMS 22 uses energy consumption measurements to refine and normalise its models of the property 20 and heating systems (as described in WO/2015/071654 A1, for example). In the event of Central Server 10 failure or communications failure, the HEMS 22 can continue managing the property's heating unaffected.

After an interval the HEMS 22 performs another optimisation calculation (as per predictive demand control again), and sends the updated forecast to the Central Server 10. The Central Server 10 continuously collects demand forecasts from the portfolio of properties, and calculates whether the aggregate demand forecast 14 has diverged from the desired shape. It can use this information to decide whether to trigger another "coordination" calculation automatically, thus ensuring feedback and continuous management of demand.

In some embodiments of the technology, properties that are not functioning as expected (e.g. faults prevent the local energy devices being controlled) or are not contactable (e.g. the property is effectively 'offline' since the HEMS 22 is not connected to the internet) can be detected and treated appropriately by the Central Server 10. Such a property 20 may be detected by its Optimiser State 18 not being retrievable, or forecasts specific to the property 20 not being received from the HEMS 22. In these cases, for example, additional margin can be allowed in demand usage allocate to homes with unknown contributions to the energy network 30.

In some embodiments of the technology, the predictive demand control in both the simulated agent, and the actual HEMS 22, enables comfort requirements of property owners to be honoured. For example, if adhering to logic parameters that require a constraint to be met that would lead to the local heating not being used in a way that provides the required comfort, feedback is provided by the HEMS 22 to the Central Server 10 indicating that logic parameters defining a demand constraint request cannot be fully met. This allows both the needs of the energy network 30 and the needs of homeowners to be quantitatively balanced. Where reference is made to comfort requirements, such comfort requirements may relate to user input temperature settings for the property, and to periods during which those temperatures are desired. More generally, these comfort requirements are referred to as condition constraints, defined by the users of the HEMS 22 and/or energy device(s) 24. The condition constraints define future target performance of the energy device(s) 24, and in this way allow the HEMS 22 to forecast future energy usage (or generation, or storage) requirements and thus allow the HEMS 22 to model and/or simulate aspects of future performance of the system.

It should also be understood that the system control provided by the Central Server 10 is not restricted to power demand constraints and power forecasts. Other quantities can be forecast, such as return temperatures on a district heat network, and the influence of other quantities can be assessed, such as the choice of primary flow temperature on a district heat network.

When determining demand forecast using forecast aggregation across the portfolio - i.e. adding up forecasts for the total demand in the portfolio - is straightforward when time-steps are aligned. However, this step may involve interpolating power values between time-steps, correcting using cumulative sums to ensure the total energy is the same, and allowing appropriately for missing properties (e.g. including minimum or maximum power estimates according to the consumer of the forecast).

Coordination algorithms as discussed below can be adjusted according to how fairly the burden of demand response is shared between different properties 20 in a portfolio. For example, a strategy may involve large consumers of power having a proportional decrease in load, or may involve every householder being constrained to a similar reduction in comfort level.

The described approach of using model-based prediction enables an efficient practical implementation, since large quantities of historical demand data are not required since the models can extrapolate beyond scenarios already observed. Learning modules to determine model parameters are delegated to individual HEMS 22, and so operate locally at each property 20, meaning that there is little or no computational impact on the Central Server 10.

In addition, by allowing users to set property-specific requirements at the local level using the HEMS 22 in each respective property, centralised optimisation strategies take account of consumer requirements. Operation is simple from a consumer perspective and settings directly reflect their needs, and these needs can be directly traded-off against network requirements.

To summarise its operation, the HEMS 22 in each property receives logic parameters 16 from the Central Server 10. The HEMS 22 performs optimisation periodically (i.e. runs 'optimisation algorithms') using inputs from sensors associated with the property and property-specific user settings, and uses the output of this optimisation to control devices associated with the property (such as heating systems). The HEMS 22 sends a demand forecast periodically (or on demand) to the Central Server 10. The HEMS 22 continuously learns properties of the property and its associated devices, and their performance, using learning modules. Further, the HEMS 22 learns local energy consumption patterns, and stores these in persistent memory, to form an Optimiser State 18 associated with the property.

In general terms, the Central Server 10 fulfils the following roles:
- receives configurations indicating groups of properties in a portfolio;
- receives Demand Management Request 12 from the energy network 30 (which may include an instruction to run periodically);
- receives demand forecasts from HEMS 22 systems, and aggregates them to establish demand across the portfolio, to create an aggregate demand forecast 14, which is optionally provided to the energy network 30;
- implements a balancing module to run balancing algorithms that use the aggregate demand forecast 14 to make an automatic decision to run a coordination algorithm - which, when requested (either manually or automatically), requests Optimiser States 18 from HEMS 22 associated with the properties of the portfolio, or with a subset of the portfolio. First, the Central Server 10 iteratively uses simulated agents to run cloned optimisation calculations with trial logic parameters and updates the trial logic parameters based on the determined outcome, and subsequently sends the final determined logic parameters 16 to the HEMS 22 to modify the control in each property; and
- sends outputs from the coordination module 110 to the energy network 30 (e.g. aggregate demand, and an indication of how closely the results fit the 'expected shape' of demand, and/or other relevant predictions).

Looking in more detail, Figure 2 shows the more detailed interactions between each system component and the methods and algorithms each component is executing. The HEMS 22 runs a Learning module, implementing a learning algorithm, to characterise the home - which forms the Optimiser State 18. This can be used to run optimisation algorithms (i.e. via the Optimisation Module) in the HEMS 22 whose output is used by the Control Module (implementing a control algorithm) to control the home's heating system. The Optimiser State 18 from each of many HEMS 22 is provided to the Central Server 10 which can itself run the Optimisation Module to explore hypothetical scenarios. If the energy network 30 makes a Demand Management Request 12 the Central Server 10 runs the Coordination Algorithm which will determine logic parameters to send to each HEMS 22 to modify the patterns of energy consumption. At the same time each HEMS 22 is providing live Demand Forecasts (output from the Optimisation Module) which are aggregated by the Central Server 10 to provide an Aggregate Demand forecast 14 to the energy network 30, and also to trigger the Balancing Algorithm to determine if the Coordination Algorithm needs to be re-run.

In some embodiments of the technology, the learning modules run only in the HEMS 22 (i.e. locally, within each property). This approach is advantageous since it uses the distributed processing of the HEMS 22 systems and avoids intense processing in the Central Server 10.

The learning module is configured to:
1. Make initial assumptions about property characteristics based on its configuration;
2. Continuously gather data from sensors and actuators in the property (by continuously, we mean by accessing the latest collected/stored data, or at regular short intervals providing the impression of a continuously updating service - e.g. every 30 seconds, or 60 seconds, or 120 seconds, for example); and
3. Periodically (e.g. once per day) process this gathered data to update the stored energy characteristics of the property (e.g. the power rating of the heating system, and/or model coefficients using Home Heating Assessment methodology as described in WO2015/071654) and local uncontrollable load patterns (e.g. an Uncontrollable Load Profile, a list of instantaneous hot water consumption events, and/or statistical models of baseload electricity consumption), etc.

Determined or updated energy characteristics of the property are stored in persistent storage in the HEMS 22, and preferably also backed up to the Central Server 10 for robustness. In described embodiments, the energy characteristics of the property are also provided to the Optimisation Module running in the HEMS 22 and as part of the Optimiser State 18 sent to the server.

As described above, the Optimisation Module implements an optimisation algorithm. The Optimisation Module function as part of the HEMS 22 associated with each property, but the optimisation algorithm is also implemented centrally by the Central Server 10, to simulate the performance of energy systems operating at properties. In this sense, the optimisation algorithm is run as a 'simulated agent' by the Central Server 10.

Within the HEMS 22, the optimisation algorithm runs periodically (e.g. every 15 minutes) or when a major change is detected, or logic parameters are received. Within the Central Server 10, the optimisation algorithm is run on request by the coordination module 110, and the simulated agent operating within the context of the coordination algorithm.

Within the HEMS 22, the Optimiser State 18 is determined from data which may include the property current state (temperature / occupancy, for example), property energy characteristics and patterns (from the Learning Algorithm), user comfort settings etc. (from the user interface associated with the HEMS 22), energy "cost" variations imposed by the energy supplier. Within the Central Server 10, the Optimiser State 18 is provided by the coordination module 110.

The optimisation algorithm typically calculates the "best" control strategy to meet the comfort requirements associated with the property while staying within any demand constraints and system constraints. The rating of the strategy or strategies (i.e. determining which one of the possible options is the "best") is made according to some criterion or combination of criteria, including but not being restricted to least 'cost', least energy use, or lowest carbon use. For example, the optimisation algorithm may apply the method outlined in WO2013/171448 to determine the 'best' approach to meeting the requirements.

In some embodiments of the technology, the Optimisation Module (or optimisation algorithm) outputs forecasts/predictions (in the form of a time-series of timestamp-value pairs, for example) relating to power consumption, room temperature, radiator water temperatures, etc.

The Control Module is operable to run within the HEMS 22 at each property, and generally determines how the heating system in the property is controlled using the output from the Optimisation Module (as discussed above).

The Control Module (implementing the control algorithm) is run continuously (i.e. at regular short intervals providing the impression of a continuously updating service, as described previously) within the HEMS 22. The inputs to the Control Module are the outputs of the most recent optimisation algorithm (i.e. the predictions of future power consumption and/or conditions of systems within the property). In some embodiments, the inputs also include the most recent logic parameters received from the Central Server 10 coordination module 110.

Heating system commands that best meet the intentions of the optimisation are calculated (for example, on/off commands to match the required power level via pulse-width modulation, or a heating water set point to match the radiator water forecast). A set of intervals for power honouring is determined (for example half hour intervals or intervals defined via the logic parameters). If it is the first time, or we have recently transitioned to a new interval, the accumulated energy is set to zero for that interval (i.e. the recorded energy usage is reset for that period). Energy for the current interval is accumulated using either energy meter readings or an estimated power value from a model.

It is calculated whether any power constraint for the current period can still be honoured, and if not the current heating system logic parameters are overridden. For example, if the energy exceeds a maximum power constraint if averaged over the whole interval, the heating system is turned off (or down); or if the minimum power constraint is unlikely to be achievable with the heating system fully on, the heating system is turned on (or up).

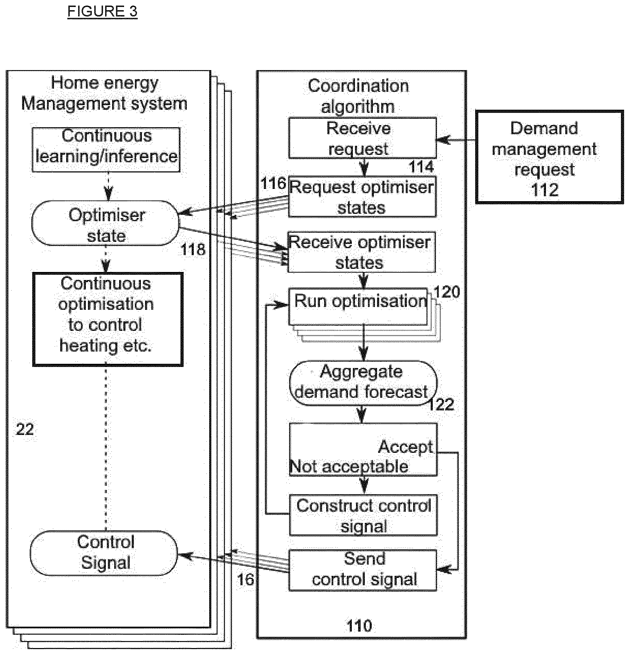

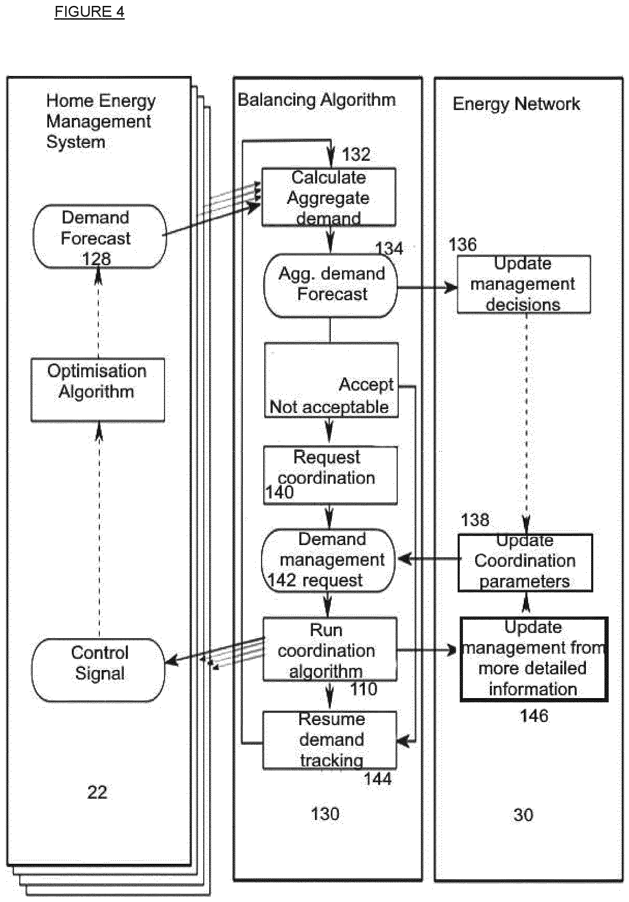

Figures 3 and 4 show the detailed steps involved in the Coordination Algorithm applied via a coordination module 110, and in the Balancing Algorithm applied via a balancing module, respectively. In broad terms, the coordination module 110 is operated at the Central Server 10 (or is caused to operate by the Central Server 10) on receipt 114 of a Demand Management Request 112. In some circumstances no simulation or calculation is required, where the Demand Management Request 112 makes an inflexible demand (e.g. if the request is to reduce power usage immediately in all HEMS 22, that command may simply be relayed via an output Control Signal). In other circumstances, the Demand Management Request 112 may be achievable using multiple different control strategies, and so a coordination strategy is required.

The coordination module 110 requests 116 and receives 118 from the one or more HEMS 22 the current respective Optimiser States 18 associated with the HEMS 22 within the portfolio being managed. A Run Optimisation process 120 is carried out in which a Simulated Agent is set up, corresponding to each HEMS 22, and the Optimisation Algorithm is run for each with the Optimiser State 18 for that HEMS 22 as the input, and with no Control Signal present (i.e. the HEMS 22 control remains unchanged). An Aggregate Demand forecast 122 (as well as other information) is produced by combining the results from the Optimisation for each Simulated Agent (i.e. to determine the total demand across the portfolio if the simulated strategies were performed).

The coordination module 110 then determines the acceptability of the strategy. If the Aggregate Demand forecast 122 from the simulated agents is found to be acceptable (i.e. to meet the Demand Management Request 112 criteria) then there is no need to further manage demand, and so the logic parameters 16 used in that simulation may be output, and communicated to the respective HEMS 22. If the Aggregate Demand forecast 122 is found not to be acceptable, then the Run Optimisation process is performed again, with proposed logic parameters 16 allocated to one or more of the HEMS 22 so as to alter the control of those systems, or where logic parameters 16 are already allocated in the simulation, updating those logic parameters 16 to change the control of the simulated HEMS 22. Typically, this process involves more than a single iteration. For example, there may be between 1 and 100, or preferably between 5 and 50, or more usually between 10 and 20 iterations of simulating the operation of the HEMS with different logic parameters before selecting a set of updated logic parameters to be communicated from the Central Server 10 to the HEMS 22.

As previously described, the logic parameters 16 may take the form of a demand constraint signal, a virtual cost signal or a variable cost/constraint signal. As discussed in more detail below, the nature of the coordination algorithm depends on the type of coordination strategy being employed. In general terms, the Run Optimisation involves constructing an initial set of logic parameters 16 for each simulated agent. An initial value for the logic parameters 16 is determined by comparing the Aggregate Demand forecast 122 (and other optimisation output) with the specification in the Demand Management Request 112. The Optimisation Algorithm is run again for every HEMS 22 using the simulated agent, with the new proposed logic parameters 16 present. On the basis of the aggregate output from the simulated agents, there may be no need to manage demand further or else a new set of logic parameters 16 is determined by comparing the new Aggregate Demand forecast 122 from the simulated agents with the original Demand Management Request 112. The Run Optimisation is then repeated and acceptability determined again, until either an acceptable result is achieved (i.e. aggregate demand is acceptable) or a maximum number of iterations is exceeded in which case the algorithm halts.

Once the outcome is determined to be acceptable, the determined logic parameters 16 are sent to all HEMS 22 in the portfolio.

In more general terms, if the Central Server 10 determines that the aggregate forecast energy usage for the properties fails to comply with the requirements, the simulation is repeated using revised sets of logic parameters (which differ from the updated sets previously used in the simulation) to determine whether the revised values meet the requirements of the system. In embodiments, and as mentioned above, the simulation may be run through multiple iterations, each time using different revised sets of logic parameters. The determined aggregate energy usage may then be compared across the various sets simulated, and an optimum or preferred set of logic parameters selected to be communicated to the respective HEMS 22.

In some embodiments of the technology, the system employs a Balancing Algorithm (see Figure 4) via a balancing module 130, which triggers automatic executions of the Coordination Algorithm. This enables more robust and reliable operation as deviations can be reacted to quickly. The Balancing Algorithm can be run continuously and/or frequently on the Central server 10. For example, the Balancing Algorithm may run whenever a new forecast is received from any individual HEMS 22.

The Balancing Algorithm receives Demand forecasts 128 from HEMS 22 within the portfolio and sums them to calculate 132 an Aggregate Demand forecast 14. This Aggregate Demand forecast 14 is communicated 134 to the Energy network 30 to assist with management - i.e. to inform the network controllers of anticipated upcoming demand within the network (which may result in energy network management decisions being updated 136, coordination parameters being updated 138, and new Demand Management constraints being communicated from the Energy network 30).

The Balancing Algorithm then determines acceptability on the basis of the Aggregate Demand forecast 14 (and potentially other criteria), to establish whether re-coordination is required, i.e. running the Coordination Algorithm 110. A Request Coordination 140 command is generated where the Aggregate Demand Forecast is found to be unacceptable, resulting in a new Demand Management Request being generated 142. Information from the Balancing Algorithm may be fed back to the Energy Network 30 in order to update management of the network with the information which may include details of the Demand Management Request.

The nature of the Balancing Algorithm depends on the coordination scenario; usually (but not always) it will be the same as the Determine Acceptability algorithm in the Coordination algorithm. For example, it may be a simple determination to check whether demand constraints have been violated.

If required, a Demand Management Request 12 may be generated 142 by the Balancing Algorithm, to the Coordination Algorithm, potentially resulting in Control signals 16 being sent to HEMS 22 and updated forecasts sent to the Balancing Algorithm.

Subsequently, the demand tracking process is resumed 144, and the Balancing Algorithm reverts to tracking Demand Forecasts 128 generated by the HEMS and monitoring Aggregate Demand.

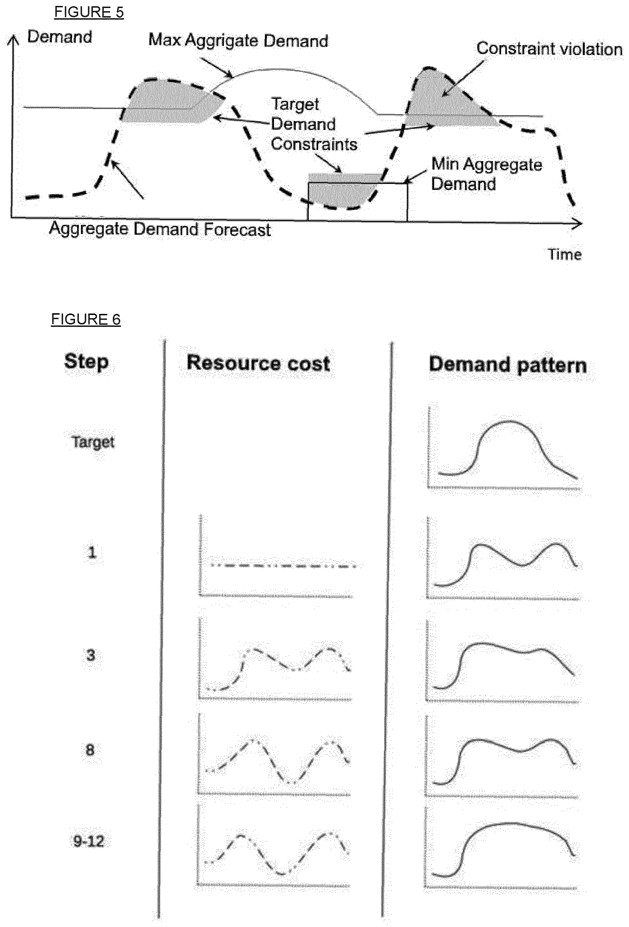

Figure 5 illustrates how a Load Capping Coordination Algorithm adjusts aggregate demand by setting demand constraints during periods when the Maximum Aggregate Demand is exceeded or demand falls below the Minimum Aggregate Demand.

Figure 6 shows the evolution of a cost-based Coordination Algorithm (as applied in Example 1). Each small graph is of the next 24 hours, showing the cost-base control signal (left column) or the aggregated demand (right column). The baseline demand pattern has peaks in the morning and evening but the target demand shape is flatter (top right). As the algorithm iterates (progressing down through the rows), it acts to increase costs at the times of peak demand (twin peaks appearing in cost signal) which incentivise each property to move demand earlier and later, resulting in a flatter demand profile.

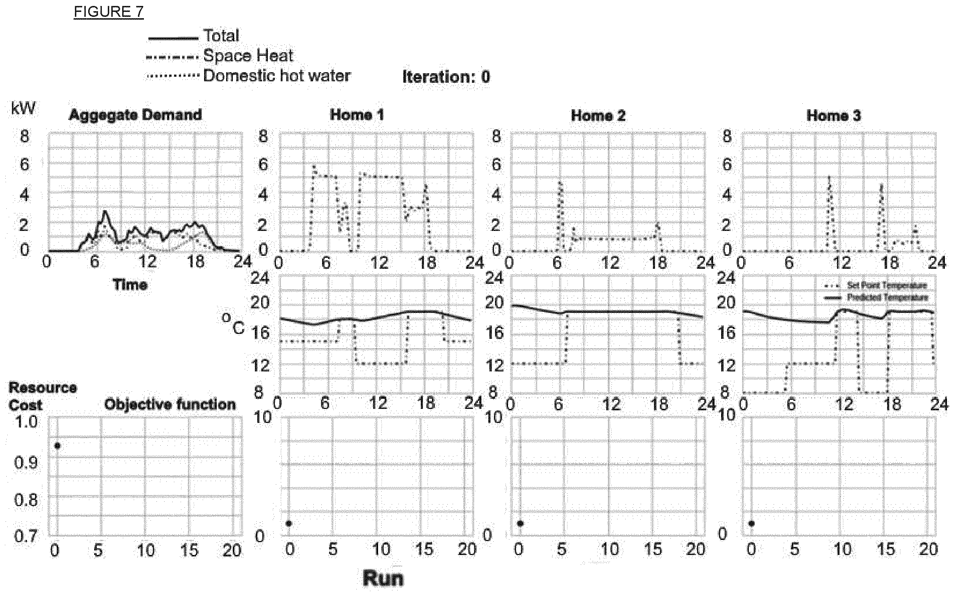

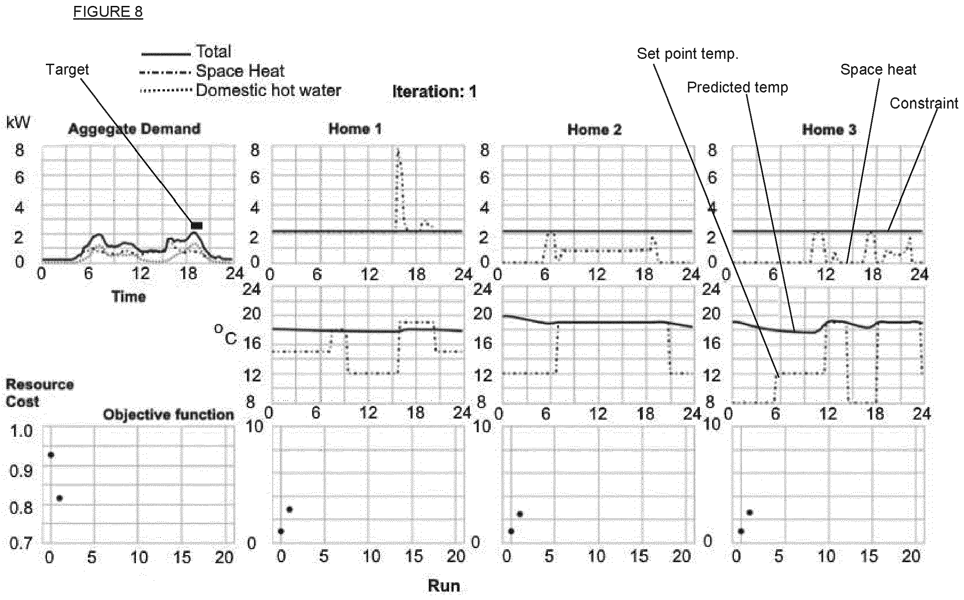

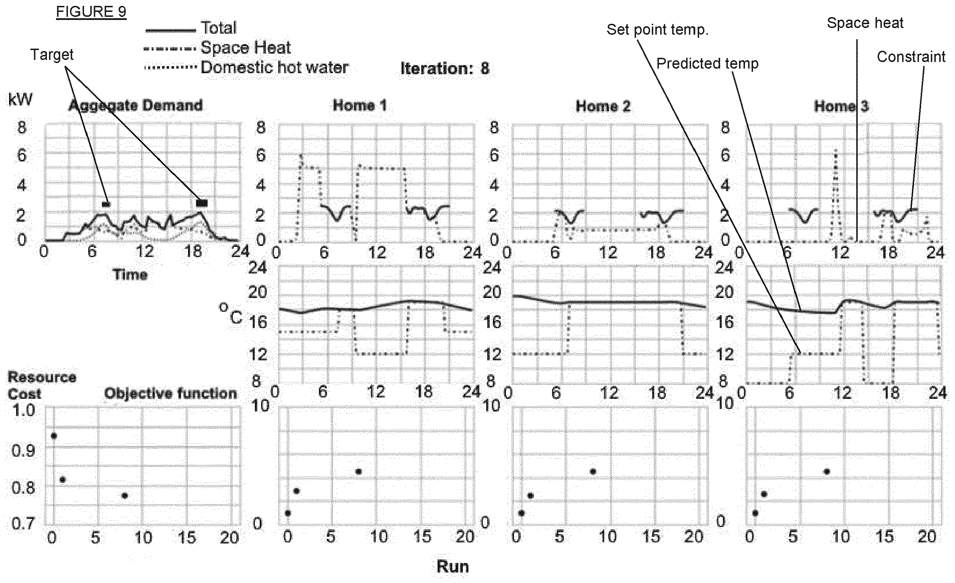

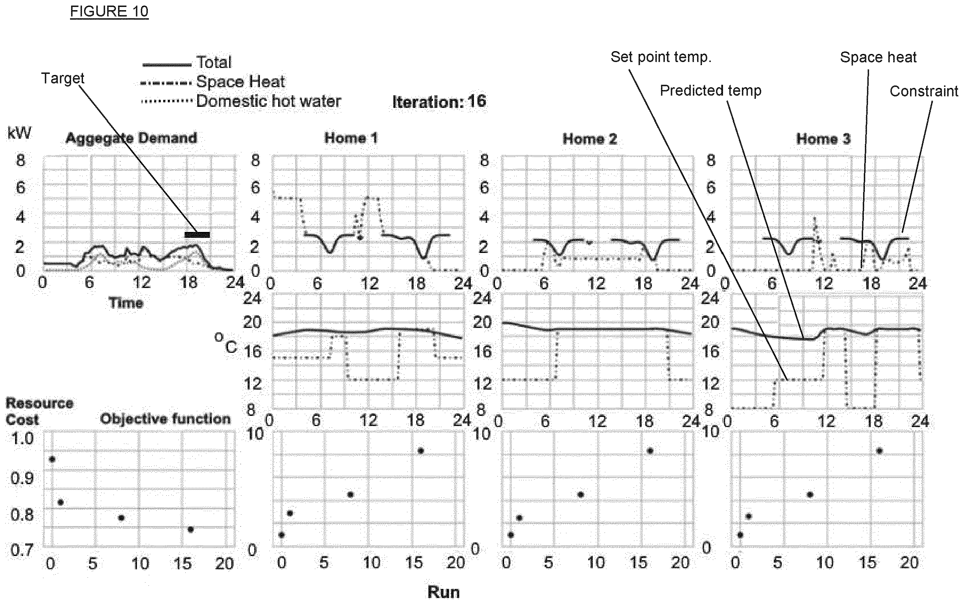

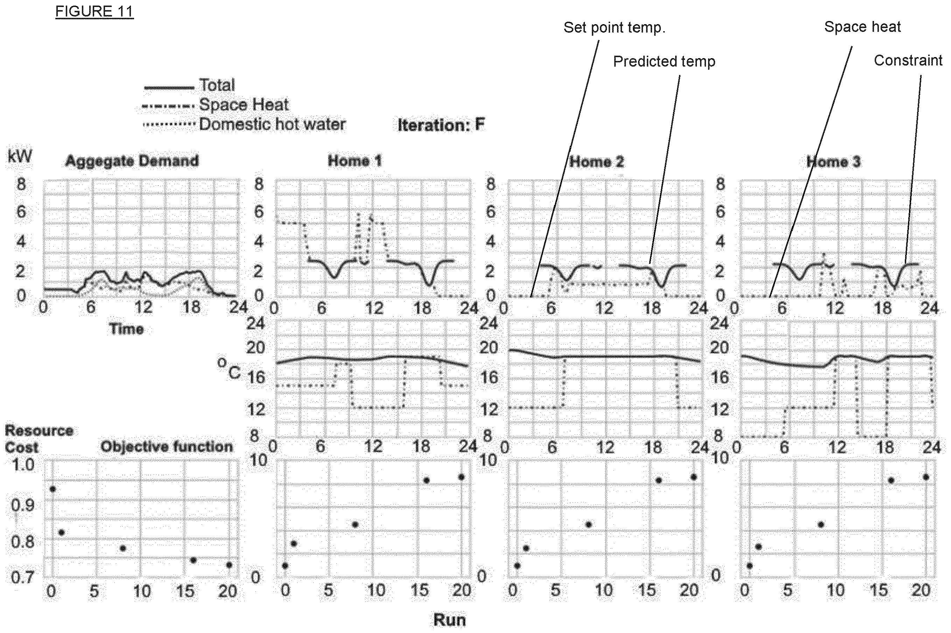

Figures 7 through 11 show the steps involved in a constraint-based Coordination Algorithm (see Example 2). The top row shows energy demand predictions for the next 24 hours; the top left small graph shows the aggregate demand, with the predicted hot water demand (which cannot be shaped) added to the sum of the space heating demand from each home. The rest of the top row shows the predicted space heating demand for each of three properties (outputs from the Optimisation Module). The middle row shows for context the room temperature predictions for each property (bold line) with the user's preferred comfort levels (set point) shown as a dashed line. The bottom row shows the cost of the objective function as an overall value (bottom left figure) and for each property separately, where the x axis in these graphs showing the change from iteration to iteration; the overall picture in Figure 11 is that the cost has increased for each property individually (as their heating patterns have moved away from the most cost-optimal strategy) but for the network as a whole (bottom left figure) the cost has reduced, when the efficiency improvements for the network are taken into account as well as the individual property costs.

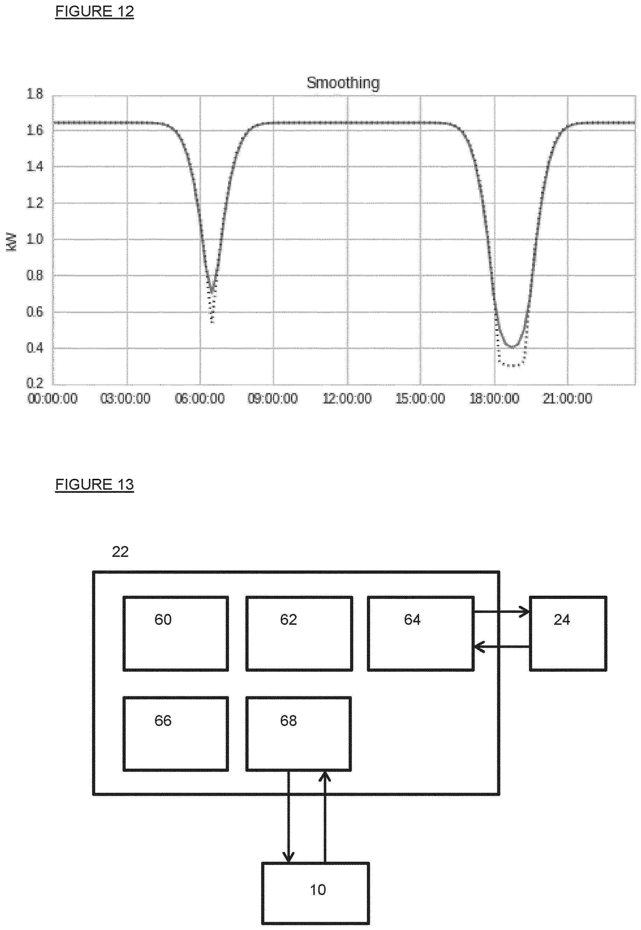

Figure 12 shows how logic parameters can be smoothed in order to avoid the adverse effects of sudden changes in demand.

Figure 13 illustrates the general components of a HEMS 22, which includes a processor 60, memory module 62, access to storage media 66, and at least one communication interface 64, 68 for communicating with the local heating system 25 and/or other devices associated with the property 20, and with the Central Server 10.

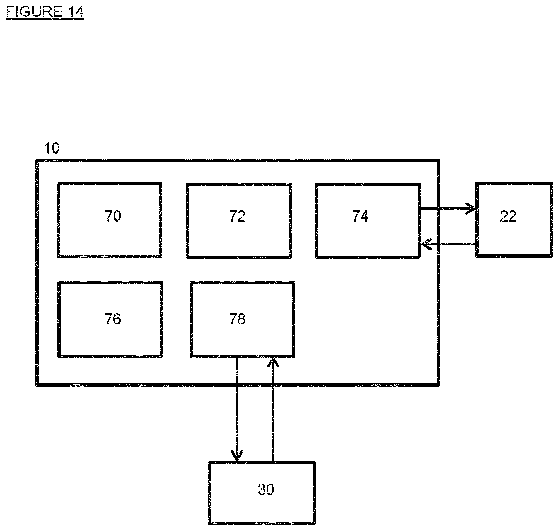

Figure 14 illustrates the general components of a Central Server 10 as outlined herein. In broad terms the Central Server 10 includes a processor 70, memory module 72, storage media 76, and at least one communication interface 74, 78 operable to communicate with the HEMS 22 associated with properties 20 associated with the Central Server 10, and with the Energy Network 30 (i.e. with the systems managing the Energy Network).

When used in this specification and claims, the terms "comprises" and "comprising" and variations thereof mean that the specified features, steps or integers are included. The terms are not to be interpreted to exclude the presence of other features, steps or components.

The invention may also broadly consist in the parts, elements, steps, examples and/or features referred to or indicated in the specification individually or collectively in any and all combinations of two or more said parts, elements, steps, examples and/or features. In particular, one or more features in any of the embodiments described herein may be combined with one or more features from any other embodiment(s) described herein.

Protection may be sought for any features disclosed in any one or more published documents referenced herein in combination with the present disclosure.

Although certain example embodiments of the invention have been described, the scope of the appended claims is not intended to be limited solely to these embodiments. The claims are to be construed literally, purposively, and/or to encompass equivalents.

### REPRESENTATIVE FEATURES

Representative features are set out in the following clauses, which stand alone or may be combined, in any combination, with one or more features disclosed in the text and/or drawings of the specification.
1. A system for controlling energy supply to and/or consumption of energy by multiple properties from an energy network so as to cause an aggregate of the energy consumed at the properties to comply with one or more requirements, each property having an associated energy management device operable to control consumption of energy at its associated property by controlling one or more energy devices associated with the property, the system including a controller configured to:
   receive Optimiser State data from each energy management device, the Optimiser State data including data relating to the one or more energy devices associated with the property, and including a current state and settings of the energy management device;
   determine an aggregate forecast energy usage for the properties using the received Optimiser State data,
   determine an energy management rule to be imposed on each energy management device so as to update the control of its associated energy devices and so update the energy consumption forecast for that property, such that the aggregate of the updated energy consumption forecasts complies with the requirements; and
   communicate the energy management rule to the energy management devices.
2. A system according to clause 1, wherein the controller is configured to determine a first energy management rule to be imposed on a first one of the energy management devices, and a second energy management rule to be imposed on a second one of the energy management devices, the first energy management rule being different to the second energy management rule, and the first and second energy management rules are communicated respectively to the first and second energy management devices.
3. A system according to clause 1 or clause 2, in which determining an energy management rule includes simulating performance of the energy management device by applying the proposed energy management rule to the information provided by the Optimiser State data, so as to simulate the effect of applying the proposed energy management rule to the energy management device on its performance, in order to update an energy usage forecast for that property.
4. A system according to any preceding clause, wherein each energy management device is operable to control a temperature management system for heating and/or cooling its associated property, and the Optimiser State data includes information relating to a temperature associated with the property, and a set point schedule of target temperatures received from a user associated with the property.
5. A system according to clause 4, wherein each energy management device is operable to counteract, at least in part, deviations in a forecast temperature from the set point schedule, caused by application of the proposed energy management rule associated with the respective energy management device, and wherein this aspect of the operation of the energy management device is included in the simulation.
6. A system according to clause 5, wherein the deviations in temperature from the set point schedule include an allowed margin of deviation from the stored set points.
7. A system according to any preceding clause, wherein the Optimiser State data includes one or more of the following:
   data describing properties of the energy device(s) controlled by that respective energy management device;
   data describing a current state of the energy device(s) controlled by that respective energy management device;
   data describing a current condition of the property associated with that respective energy management device;
   data describing learned thermal properties of the property associated with that respective energy management device;
   data describing one or more condition constraints imposed on the energy management device;
   data describing weather forecast information received by the energy management device; and
   energy charging regime information associated with an electric vehicle.
8. A system according to any preceding clause, wherein the or each energy management rule is one of:
   a demand constraint indicating a usage threshold, and optionally a period of time during which the usage threshold applies; or
   a function associating energy usage with a penalty that varies overtime.
9. A system according to any preceding clause, in which the system is configured to receive data indicating the requirements imposed on the supply to and/or consumption of energy by the properties from the energy network.
10. An energy management device configured to control energy consumption associated with a property, the energy management device being operable:
   to receive a control signal defining an energy management rule to be imposed on energy usage at the property from a remote controller, and
   to control the energy consumption of an energy device associated with the property so as to comply with the received rule.
11. An energy management device according to clause 10, wherein the energy management device provides a processor configured to determine a control strategy for controlling the energy device so as to comply with the energy management rule, and to forecast aggregate energy consumption over a given period.
12. An energy management device according to clause 10 or clause 11, wherein
   the energy management device is operable to control the energy consumption of multiple energy devices associated with the property such that the aggregate energy usage of those energy devices complies with the received energy management rule.
13. An energy management device according to any one of clauses 10 to 12, wherein the energy management rule includes a demand constraint indicating a usage threshold, and optionally a period of time during which the usage threshold applies, such that aggregate energy consumption by the energy device(s) is not to exceed the usage threshold, or alternatively such that energy consumption is not to fall below the usage threshold.
14. An energy management device according to any one of clauses 10 to 13 wherein the energy management rule includes a function associating energy usage with a penalty that varies over time, and wherein the energy management device is configured to control the energy device(s) so as to minimise the incurred penalty.
15. An energy management device according to any one of clauses 10 to 14, wherein the energy device is, or the multiple energy devices includes, one of the following: a central heating system, an air-conditioning system, a refrigeration system, a hot water storage system, an electric vehicle (EV) charging system, a washing machine, an electric battery, a heat battery.
16. An energy management device according to any one of clauses 10 to 15, wherein the energy management device maintains Optimiser State data including data relating to the one or more energy devices associated with the property, and including a current state and settings of the energy management device from which a forecast of energy consumption of the energy devices at the property can be calculated, and is operable to communicate the Optimiser State data to the remote controller.
17. An energy management device according to any one of clauses 10 to 16, wherein the energy management device is further operable to receive one or more condition constraints from a user, the condition constraints defining a condition of the property, wherein control of the energy device(s) affects the condition of the property that is affected by usage of the energy device(s), and wherein the energy management device is configured to determine a strategy for controlling the or each device so as to optimise compliance with the energy management rule and the condition constraints.
18. An energy management device according to clause 17, wherein the energy management device is operable to control a temperature management system for heating and/or cooling its associated property, and wherein the condition constraints include a set point schedule of target temperatures to be achieved within the property.
19. An energy management device according to clauses 18, where dependent directly or indirectly on clause 16, wherein the Optimiser State data includes at least one of: information relating to a temperature associated with the property, and a set point schedule of target temperatures received from a user associated with the property.
20. An energy management device according to clause 19, further operable to counteract, at least in part, deviations in a forecast temperature from the set point schedule, caused by application of the energy management rule.
21. An energy management device according to clause 20, wherein the deviations in temperature from the set point schedule include an allowed margin of deviation from the stored set points.
22. An energy management device according to clause 16, or to any one of clauses 17 to 21 where dependent directly or indirectly on clause 16, wherein the Optimiser State data includes one or more of the following:
   data describing properties of the energy device(s);
   data describing a current state of the energy device(s);
   data describing a current condition of the property;
   data describing learned thermal properties of the property;
   data describing one or more condition constraints defined by a user;
   data describing weather forecast information received by the energy management device; and
   energy charging regime information associated with an electric vehicle.
23. A method of controlling energy supply to and/or consumption of energy by multiple properties from an energy network so as to cause an aggregate of the energy consumed at the properties to comply with one or more requirements, each property having an associated energy management device operable to control consumption of energy at its associated property by controlling one or more energy devices associated with the property, the method including the steps of:
   receiving data indicating the requirements imposed on the supply to and/or consumption of energy by the properties from the energy network;
   receiving Optimiser State data indicating including data relating to the one or more energy devices associated with the property, and including a current state and settings of the energy management device;
   determining an aggregate forecast energy usage for the properties using the received Optimiser State data,
   determining an energy management rule to be imposed on each energy management device so as to update the control of its associated energy devices, and so update the energy consumption forecast for that property, such that the aggregate of the updated energy consumption forecasts complies with the requirements; and
   communicating the energy management rule to the energy management devices.
24. A method according to clause 23, wherein determining an energy management rule includes:
   determining a first energy management rule to be imposed on a first one of the energy management devices, and a second energy management rule to be imposed on a second one of the energy management devices, the first energy management rule being different to the second energy management rule, and
   communicating the first and second energy management rules to the first and second energy management devices respectively.
25. A method according to clause 23 or clause 24, wherein determining an energy management rule includes:
   simulating performance of the energy management device by applying the proposed energy management rule to a simulation based on the Optimiser State data, so as to simulate the effect of applying the proposed energy management rule to the energy management device on its future performance, in order to update the energy consumption forecast for that property.

## Claims

1. A system for controlling energy supply to and/or consumption of energy by multiple properties from an energy network so as to cause an aggregate of the energy consumed at the properties to comply with one or more requirements, each property having an associated energy management device operable to control consumption of energy at its associated property by controlling one or more energy devices associated with the property, the system including a controller configured to:
receive first Optimiser State data from a first energy management device, the first Optimiser State data including data relating to one or more energy devices associated with the first energy management device, including a current state and settings of the first energy management device, and including a first set of logic parameters;
receive second Optimiser State data from a second energy management device, the second Optimiser State data including data relating to one or more energy devices associated with the second energy management device, including a current state and settings of the second energy management device, and including a second set of logic parameters;
simulate the operation of the first and second energy management devices using the received first and second Optimiser State data, to determine a first aggregate forecast energy usage for first and second properties associated with the first and second energy management devices;
determine a first energy management rule to be imposed on the first energy management device and a second energy management rule to be imposed on the second energy management device, the first energy management rule defining a first updated set of logic parameters, and the second energy management rule defining a second updated set of logic parameters, the first updated set of logic parameters differing from the second updated set of logic parameters;
simulate the operation of the first and second energy management devices using the first and second Optimiser State data, updated by the first and second updated sets of logic parameters, to determine a second aggregate forecast energy usage for the first and second properties;
determine that the second aggregate forecast energy usage complies with the requirements; and
communicate the first updated logic parameters and second updated logic parameters to the respective first and second energy management devices.

2. A system according to claim 1, wherein the logic parameters define a demand constraint rule imposing an upper or lower threshold on aggregate energy usage by the energy devices associated with the respective energy management device within periods of a schedule, and optionally define periods within the schedule during which energy usage is encouraged.

3. A system according to claim 1 or 2, wherein the logic parameters define a virtual cost rule providing a function associating energy usage with a penalty that varies over time.

4. A system according to any preceding claim, wherein each energy management device is operable to control a temperature management system for heating and/or cooling its associated property, and the Optimiser State data includes information relating to a temperature associated with the property, and a set point schedule of target temperatures received from a user associated with the property.

5. A system according to any preceding claim, wherein the Optimiser State data includes one or more of the following:
data describing properties of the energy device(s) controlled by that respective energy management device;
data describing a current state of the energy device(s) controlled by that respective energy management device;
data describing a current condition of the property associated with that respective energy management device;
data describing learned thermal properties of the property associated with that respective energy management device;
data describing one or more condition constraints imposed on the energy management device;
data describing weather forecast information received by the energy management device; and
energy charging regime information associated with an electric vehicle.

6. An energy management device configured to control energy consumption associated with a property, the energy management device being operable:
to store logic parameters defining logic for scheduling usage of one or more energy devices associated with the energy management device,
to communicate Optimiser State data to a remote controller, the Optimiser State data including:
data relating to the energy device(s),
a current state and settings of the energy management device, and
the logic parameters;
to receive updated logic parameters,
to determine a control schedule for operating the energy device(s) based on the updated logic parameters, and
to control the energy device(s) according to the determined control schedule.

7. An energy management device according to claim 6, wherein the energy management device provides a processor configured to determine the control schedule, and to forecast aggregate energy consumption over a given period.

8. An energy management device according to claim 6 or claim 7, wherein the logic parameters define a demand constraint rule imposing an upper or lower threshold on aggregate energy usage by the energy devices associated with the energy management device within periods of the control schedule, and optionally define periods within the schedule during which energy usage is encouraged.

9. An energy management device according to any one of claims 6 to 8 wherein the logic parameters define a function associating energy usage with a penalty that varies over time, and wherein the energy management device is configured to control the energy device(s) so as to minimise the incurred penalty.

10. An energy management device according to any one of claims 6 to 9, wherein the energy device is configured to control energy devices including at least one of the following: a central heating system, an air-conditioning system, a refrigeration system, a hot water storage system, an electric vehicle (EV) charging system, a washing machine, an electric battery, a heat battery.

11. An energy management device according to any one of claims 6 to 10, wherein the Optimiser State data includes at least one of: information relating to a temperature associated with the property, and a set point schedule of target temperatures received from a user associated with the property.

12. An energy management device according to any one of claims 6 to 11, wherein the Optimiser State data includes one or more of the following:
data describing properties of the energy device(s);
data describing a current state of the energy device(s);
data describing a current condition of the property;
data describing learned thermal properties of the property;
data describing one or more condition constraints defined by a user;
data describing weather forecast information received by the energy management device; and
energy charging regime information associated with an electric vehicle.

13. A method of operating a system for controlling energy supply to and/or consumption of energy by multiple properties from an energy network so as to cause an aggregate of the energy consumed at the properties to comply with one or more requirements, the system providing a controller, and each property having an associated energy management device in communication with the controller, and operable to control consumption of energy at its associated property by controlling one or more energy devices associated with the property, the method including the steps of:
receiving at the controller data indicating the requirements imposed on the supply to and/or consumption of energy by the properties from the energy network;
receiving at the controller first Optimiser State data from a first energy management device, the first Optimiser State data including data relating to one or more energy devices associated with the first energy management device, including a current state and settings of the first energy management device, and including a first set of logic parameters;
receiving at the controller second Optimiser State data from a second energy management device, the second Optimiser State data including data relating to one or more energy devices associated with the second energy management device, including a current state and settings of the second energy management device, and including a second set of logic parameters;
simulating at the controller the operation of the first and second energy management devices using the received first and second Optimiser State data, to determine a first aggregate forecast energy usage for first and second properties associated with the first and second energy management devices;
determining at the controller a first energy management rule to be imposed on the first energy management device and a second energy management rule to be imposed on the second energy management device, the first energy management rule defining a first updated set of logic parameters, and the second energy management rule defining a second updated set of logic parameters, the first updated set of logic parameters differing from the second updated set of logic parameters;
simulating at the controller the operation of the first and second energy management devices using the first and second Optimiser State data, updated by the first and second updated sets of logic parameters, to determine a second aggregate forecast energy usage for the first and second properties;
determining at the controller that the second aggregate forecast energy usage complies with the requirements; and
communicating the first updated logic parameters and second updated logic parameters from the controller to the respective first and second energy management devices.

14. A method according to claim 13, wherein determining a first or second energy management rule defining a set of logic parameters includes determining logic parameters defining a demand constraint rule imposing an upper or lower threshold on aggregate energy usage by the or each respective energy device(s) associated with an energy management device within periods of a schedule, and optionally defining periods within the schedule during which energy usage is encouraged.

15. A method according to claim 13 or 14, wherein determining a first or second energy management rule defining a set of logic parameters includes determining logic parameters defining a virtual cost rule providing a function associating energy usage with a penalty that varies over time.
